# EUROPÄISCHE PATENTSCHRIFT

(11) **EP 4 523 315 B1**
(45) Veröffentlichungstag und Bekanntmachung des Hinweises auf die Patenterteilung: **24.12.2025**
(21) Anmeldenummer: 23709955.1
(22) Anmeldetag: 06.03.2023
(51) Int. Cl.: F16C 35/063, H02K 11/215, H02K 29/08, H02K 5/173

(54) **MONTAGEBAUGRUPPE, VERFAHREN ZUR HERSTELLUNG EINER MONTAGEBAUGRUPPE UND ELEKTRONISCH KOMMUTIERTER MOTOR MIT MONTAGEBAUGRUPPE**
INSTALLATION ASSEMBLY, METHOD FOR PRODUCING AN INSTALLATION ASSEMBLY, AND ELECTRONICALLY COMMUTATED MOTOR HAVING AN INSTALLATION ASSEMBLY
ENSEMBLE D'INSTALLATION, PROCÉDÉ DE FABRICATION D'UN ENSEMBLE D'INSTALLATION ET MOTEUR À COMMUTATION ÉLECTRONIQUE COMPRENANT UN ENSEMBLE D'INSTALLATION

(30) Priorität: 12.05.2022 DE 102022204652
(43) Veröffentlichungstag der Anmeldung: 19.03.2025
(73) Patentinhaber: Robert Bosch GmbH, 70442 Stuttgart (DE)
(72) Erfinder: HAUFE, Benjamin, 74182 Obersulm Willsbach (DE)
(86) Internationale Anmeldenummer: PCT/EP2023/055526
(87) Internationale Veröffentlichungsnummer: WO 2023/217432

(56) Entgegenhaltungen:
- DE-A1- 102020 212 192
- US-B2- 7 153 031
- US-B2- 7 610 671

## Beschreibung

### Technischer Hintergrund

Die Erfindung betrifft eine Montagebaugruppe nach den Merkmalen des Oberbegriffs des Anspruchs 1, ein Verfahren zur Herstellung einer Montagebaugruppe nach den Merkmalen des Oberbegriffs des Anspruch 7 sowie einen elektronisch kommutierten Motor nach den Merkmalen des Oberbegriffs des Anspruchs 8.

Eine Montagebaugruppe nach den Merkmalen des Oberbegriffs des Anspruchs 1 ist aus der DE 10 2020 212 192 A1 bereits bekannt. Bei dieser Montagebaugruppe ist ein Haltebecher (42) für ein Geberelement (26) mittels eines Befestigungsrings (40) dreh- und axialfest an einem Stirnende einer Maschinenwelle (16) verankert. Die Maschinenwelle (16) ihrerseits ist mit Hilfe von Wälzlagern (20) drehbar in einem Gehäuse (18) gelagert, wobei das dem Befestigungsring (40) zugewandte Wälzlager (20) axial beabstandet von diesem Befestigungsring (40) an einem Lagerschild des Gehäuses (18) angeordnet ist.

Darüber hinaus offenbart die DE 10 2020 204831 A1 eine elektronisch kommutierte Maschine mit einer derartigen Montagebaugruppe, welche als Antriebsaggregat für einen Bremsdruckerzeuger einer elektronisch schlupfregelbaren Bremsanlage eines Kraftfahrzeugs vorgesehen ist.

Bei dieser bekannten Maschine ist ein Signalgeber an einem der Enden einer Maschinenwelle drehfest verankert. Der mit der Maschinenwelle umlaufende Signalgeber bildet zusammen mit einem ortsfest an einem Gehäuseblock angeordneten Signalempfänger eine Sensorik zur Erfassung der Drehposition der Maschinenwelle. Das Positionssignal wird an ein elektronisches Steuergerät weitergeleitet und dort ausgewertet. Beispielsweise kann dieses Positionssignal zu einer bedarfsoptimierten elektrischen Ansteuerung eines Stators der elektrischen Maschine benutzt werden und/oder zur Bestimmung eines Betätigungswegs eines von der Maschinenwelle, ggf. über ein nachgeschaltetes Getriebe, angetriebenen Kolbens eines Druckerzeugers. Über den vom Kolben zurückgelegten Weg lässt sich das in einen angeschlossenen Bremskreis verdrängte Volumen an Bremsflüssigkeit bestimmen und daraus ein im Bremskreis zu erwartender Bremsdruck ermitteln.

Zu einer dreh- und axialfesten Verbindung des Signalgebers mit der Maschinenwelle schlägt die DE 10 2020 204831 A1 eine kraftschlüssige WellenNaben-Verbindung unter Einsatz eines Befestigungs- bzw. Toleranzrings vor. Dieser Toleranzring liegt in einem Ringspalt zwischen dem Außenumfang der Maschinenwelle und einem Innenumfang eines auf die Maschinenwelle aufgeschobenen Haltebechers des Signalgebers ein. Der Letztere trägt einen Magneten als Geberelement.

### Vorteile der Erfindung

Die vorliegende Erfindung, gemäß des unabhängigen Anspruchs 1, bildet diese bekannte Montagebaugruppe weiter, indem der Toleranzring ergänzend dazu verwendet wird, um die Lagerringe eines Wälzlagers, das zur Lagerung der Maschinenwelle vorgesehen ist, axial gegeneinander vorzuspannen. Erfindungsgemäß steht der Befestigungs- bzw. Toleranzring dafür mit einem seiner Enden aus einem Befestigungsabschnitt des Haltebechers des Signalgebers axial vor und stützt sich mit diesem vorstehenden Ende am Innenring des Wälzlagers ab. Die Verspannkraft des Wälzlagers wird von einem Federelement bewirkt, das auf der gegenüberliegenden Seite des Wälzlagers angeordnet ist und den zugeordneten Außenring des Wälzlagers belastet.

Durch die vorgesehene Abstützung des Befestigungs- bzw. Toleranzrings am Innenring des Wälzlagers kann bei der Montage des Signalgebers auf eine axiale Abstützung des Befestigungs- bzw. Toleranzrings zwecks Vermeidung einer Bewegung relativ zur Maschinenwelle verzichtet werden. Letzteres ist von besonderem Vorteil, wenn der zur Verfügung stehende Bauraum, wie bei Komponenten für Kraftfahrzeuge üblich, den Einsatz eines Abstützwerkzeugs erschwert oder gar verhindert. Das Fügen des Signalgebers kann verdeckt erfolgen, d.h. ohne Maßnahmen zur Überwachung einer solchen unerwünschten Relativbewegung zwischen Toleranzring und Maschinenwelle. Das Wälzlager ist im montierten Zustand zwischen dem Befestigungs- bzw. Toleranzring und einer vorgesehenen Wellenschulter an der Maschinenwelle in Wellenlängsachsenrichtung, d.h. axial festgelegt. Zusätzlichen Bauteile, wie beispielsweise Seegerringe, sind hierfür nicht mehr notwendig.

Ein zugehöriges Verfahren zur Herstellung einer entsprechenden Montagebaugruppe ist im unabhängigen Anspruch 7 offenbart.

Weitere Vorteile oder vorteilhafte Weiterbildungen der Erfindung ergeben sich aus den Unteransprüchen oder aus der nachfolgenden Beschreibung.

### Zeichnung

Ein Ausführungsbeispiel der Erfindung ist in der Zeichnung dargestellt und wird in der nachfolgenden Beschreibung detailliert erläutert.

Die Zeichnung umfasst hierzu mehrere Figuren, von denen
- Figur 1: die Montagebaugruppe im Längsschnitt zeigt und die
- Figuren 2a -2k: das Verfahren zur Herstellung dieser Montagebaugruppe anhand der aufeinanderfolgenden Prozessschritte veranschaulichen.

### Beschreibung eines Ausführungsbeispiels

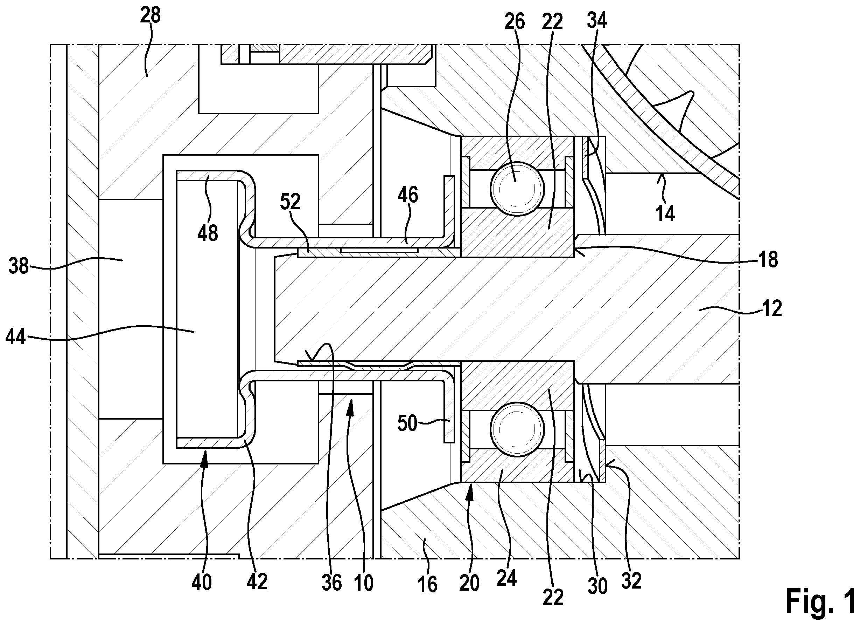

Gemäß Figur 1 umfasst eine erfindungsgemäße Montagebaugruppe (10) eine Maschinenwelle (12), welche in einer Wellenbohrung (14) eines Gehäuseblocks (16) drehbar gelagert ist. Die Lagerung erfolgt durch wenigstens zwei Wälzlager, von denen Fig.1 lediglich eines, das sogenannte zweite Wälzlager (20), zeigt. Dieses zweite Wälzlager (20) ist beispielhaft als beidseitig abgedichtetes Kugellager ausgeführt und weist einen Innenring (22), einen Außenring (24) und zwischen den Ringen in Laufbahnabschnitten aufgenommene Kugeln (26) auf. Das zweite Wälzlager (20) ist in einem zylindrischen Abschnitt einer Lageraufnahme (30) des Gehäuseblocks (16) angeordnet, welche sich zum Ende der Maschinenwelle (12) hin konisch öffnet. An den Gehäuseblock (16) ist ein elektronisches Steuergerät (28) angebaut in welches sich das Ende der Maschinenwelle (12) hinein erstreckt. Im elektronischen Steuergerät (28) ist, der Öffnung der Wellenbohrung (14) gegenüberliegend, ein Signalempfänger (38) ortsfest angeordnet.

Auf einer der Öffnung gegenüberliegenden Seite endet die Lageraufnahme (30) in einer rechtwinklig zur Wellenlängsachse ausgeführten Stützschulter (32). Diese Stützschulter (32) dient einem Federelement (34), das beispielhaft als Wellfederscheibe ausgeführt ist, als erste axiale Abstützung. Eine zweite axiale Abstützung für das Federelement (34) bildet die Seitenflanke des Außenrings (24) des zweiten Wälzlagers (20). Das Federelement (34) ist im fertig montierten Zustand unter axialer Vorspannung zwischen den beiden erläuterten Abstützungen angeordnet.

Die Maschinenwelle (12) ist in ihrem Außendurchmesser einmal rechtwinklig abgestuft und bildet dementsprechend eine Wellenschulter (18) aus. Ein in seinem Außendurchmesser kleinerer ersten Wellenabschnitt ist am Ende der Maschinenwelle (12) ausgebildet. Ein demgegenüber im Außendurchmesser größerer zweiter Wellendurchmesser durchdringt das ringförmig ausgeführte Federelement (34) und erstreckt sich weiter in die Wellenbohrung (14) hinein. Auf dem durchmesserkleineren ersten Wellenabschnitt ist das zweite Wälzlager (20) mit dem Innendurchmesser seines Innenrings (22) aufgenommen. Dieses zweite Wälzlager (20) liegt mit der Seitenflanke seines Innenrings (22) an der Wellenschulter (18) an. Zwischen dem Innendurchmesser des Innenrings (22) des zweiten Wälzlagers (20) und dem Außendurchmesser der Maschinenwelle (12) besteht eine Spielpassung, ebenso wie zwischen dem Außendurchmesser des Außenrings (24) des zweiten Wälzlagers (20) und dem Innendurchmesser der Lageraufnahme (30). Damit ist das zweite Wälzlager (20) jeweils relativverschiebbar zur Maschinenwelle (12) und zum Gehäuseblock (16) in der Lageraufnahme (30) angeordnet.

Die Maschinenwelle (12) steht mit ihrem ersten, im Durchmesser kleineren Wellenabschnitt in Richtung der Öffnung der Wellenbohrung (14) aus dem zweiten Wälzlager (20) vor. Dieser vorstehende Wellenabschnitt der Maschinenwelle (12) bildet einen Befestigungsabschnitt (36) für einen an der Maschinenwelle (12) verankerten Signalgeber (40) aus. Dazu umfasst der Signalgeber (40) einen hülsenförmigen und über das Ende der Maschinenwelle hinausragenden Haltebecher (42) sowie einen vom Haltebecher (42) getragenen Magneten (44) als Geberelement. Der Signalgeber (40) wirkt mit dem Signalempfänger (38) im elektronischen Steuergerät (28) zusammen und bildet eine Sensorik zur Erfassung eines Drehwinkels der Maschinenwelle (12) aus.

Der Haltebecher (42) des Signalgebers (40) ist ein hülsenförmiges, beidseitig offenes Bauelement, das in einen Fixierabschnitt (46) am wälzlagerseitigen Stirnende und in eine Geberaufnahme (48) für den Magneten (44) am dazu gegenüberliegenden, steuergeräteseitigen Stirnende des Haltebechers (42) gegliedert ist. Im Bereich des Fixierabschnitts (46) weist der Haltebecher (42) einen kleineren Innendurchmesser auf als im Bereich der Geberaufnahme (48), so dass der von der Geberaufnahme (48) getragene Magnet (44) die Stirnfläche der Maschinenwelle (12) radial überragt. Der Magnet (44) liegt dem Signalempfänger (38) im elektronischen Steuergerät (38) unmittelbar gegenüber.

Am wälzlagerseitigen Ende ist an den Fixierabschnitt (36) des Haltebechers (42) ein umlaufender, rechtwinklig vom Haltebecher (42) nach außen abstehender Einpressbund (50) angeformt. In der gezeigten Endposition des Haltebechers (42) besteht zwischen diesem Einpressbund (50) und der zugewandten Seitenflanke des zweiten Wälzlagers (20) ein vorgegebener axialer Abstand, d.h. der Haltebecher (42) und zweites Wälzlager (20) berühren einander nicht.

Eine Verankerung des Signalgebers (40) an der Maschinenwelle (12) erfolgt mittels eines Befestigungsrings (52). Dieser Befestigungsring (52) liegt in einem Ringspalt zwischen dem Außendurchmesser des ersten, durchmesserkleineren Wellenabschnitts der Maschinenwelle (12) und einem Innendurchmesser des Fixierabschnitts (46) des Haltebechers (42) ein. Befestigungsringe (52) sind auch unter dem Begriff Toleranzringe bekannt und stehen als geschlossene oder als offene bzw. geschlitzte Ringe zur Verfügung.

Erfindungsgemäß steht der Befestigungsring (52) mit seinem dem zweiten Wälzlager (20) zugewandten Ende aus dem Fixierabschnitt (46) des Haltebechers (42) axial vor und stützt sich an der Seitenflanke des Innenrings (22) des zweiten Wälzlagers (20) axial ab.

Durch die Ausformung der Laufbahnabschnitte für die Wälzkörper/Kugeln (26) sowohl am Innenring (22) als auch am Außenring (24) des zweiten Wälzlagers (20) sind die beiden Lagerringe über die Kugeln (26) formschlüssig und aufgrund eines herstellungsbedingt unvermeidlichen Lagerspiels axial verschieblich miteinander gekoppelt. Das Federelement (34) beaufschlagt den Außenring (24) des Wälzlagers (20) mit einer Vorspannkraft und verspannt dadurch die beiden Lagerringe des Wälzlagers (20) gegeneinander. Mit einer verspannten Lagerung einer Maschinenwelle (12) in einem Gehäuseblock (16) wird ein besonders geräuscharmer und verschleißbeständiger Betrieb einer damit ausgestatteten Maschine geschaffen.

Bei einer Herstellung der Montageeinheit kann auf eine Abstützwerkzeug verzichtet werden, das die Position des Befestigungs- bzw. Toleranzrings (52) auf der Maschinenwelle (12) bei der Montage des Signalgebers (40) absichert. Das Aufschieben des Haltebechers (42) des Signalgebers (40) auf den Befestigungsring (52) kann verdeckt durchgeführt werden, da aufgrund der axialen Anlage dieses Befestigungsrings (52) am Innenring (22) des zweiten Wälzlagers (20) keine Relativbewegung in Axial- bzw. Wellenlängsachsenrichtung zwischen Befestigungsring (52) und Maschinenwelle (12) möglich ist.

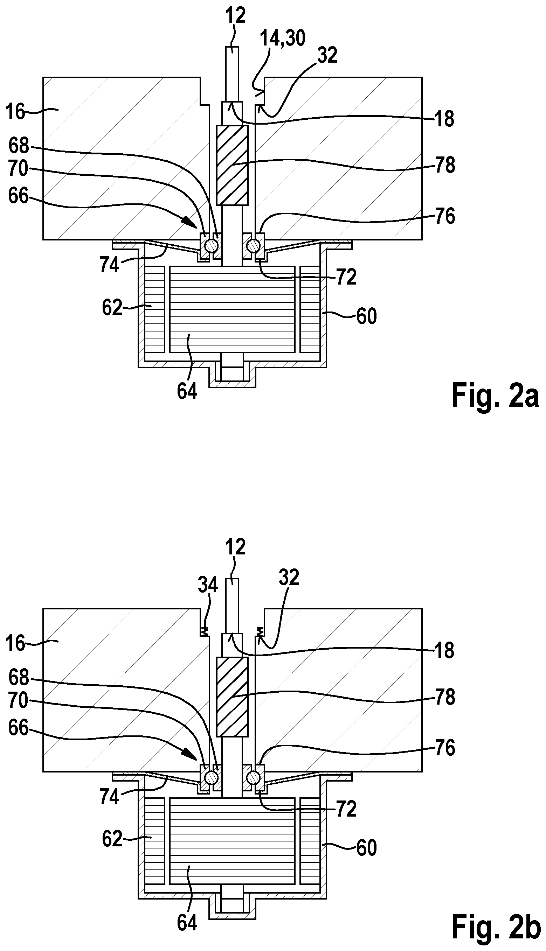

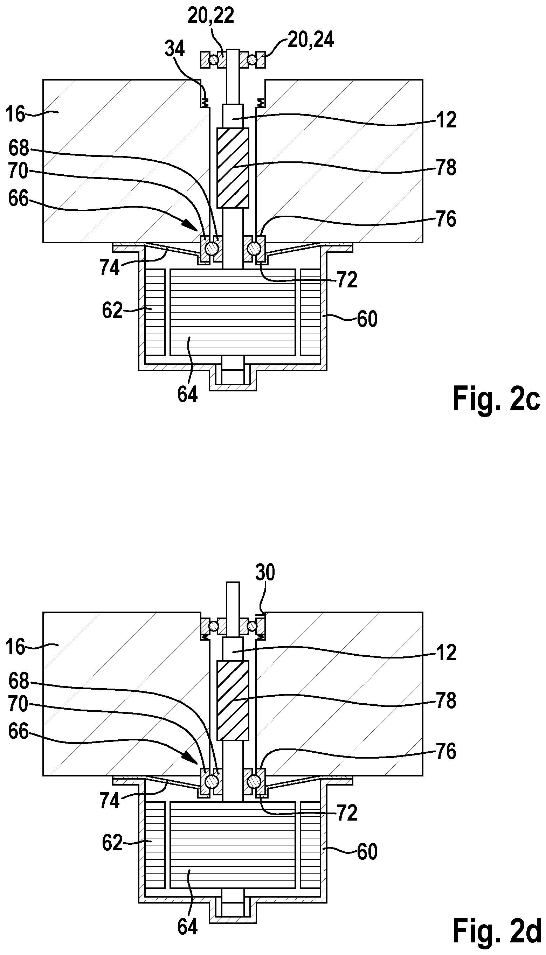

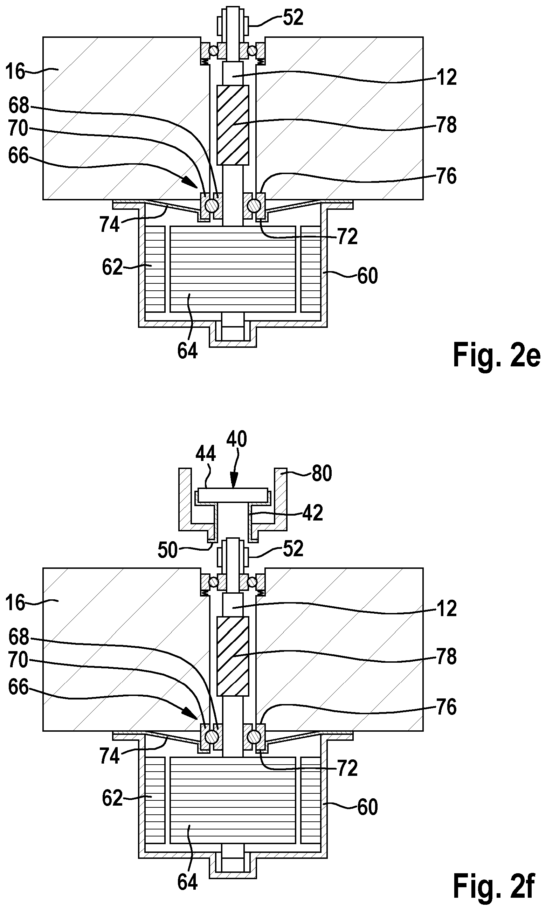

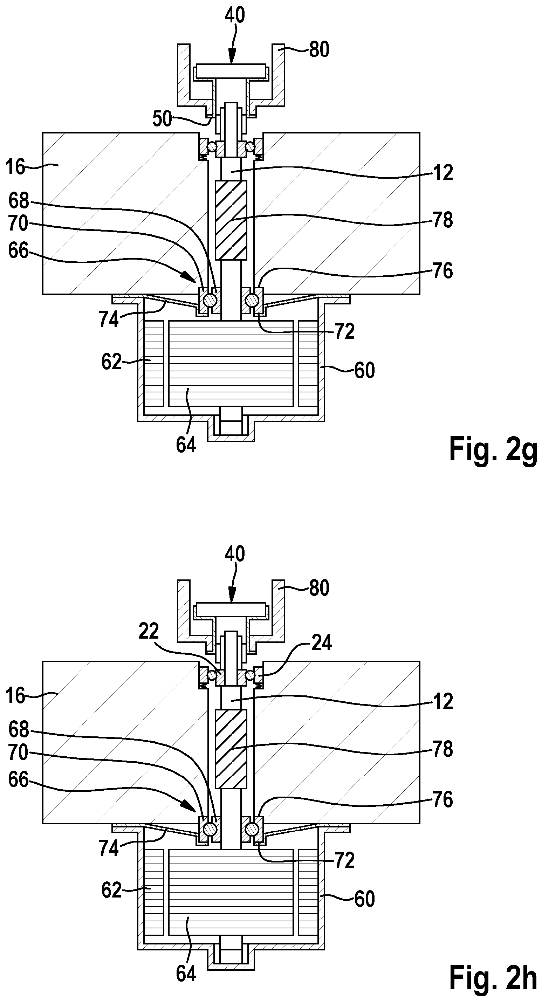

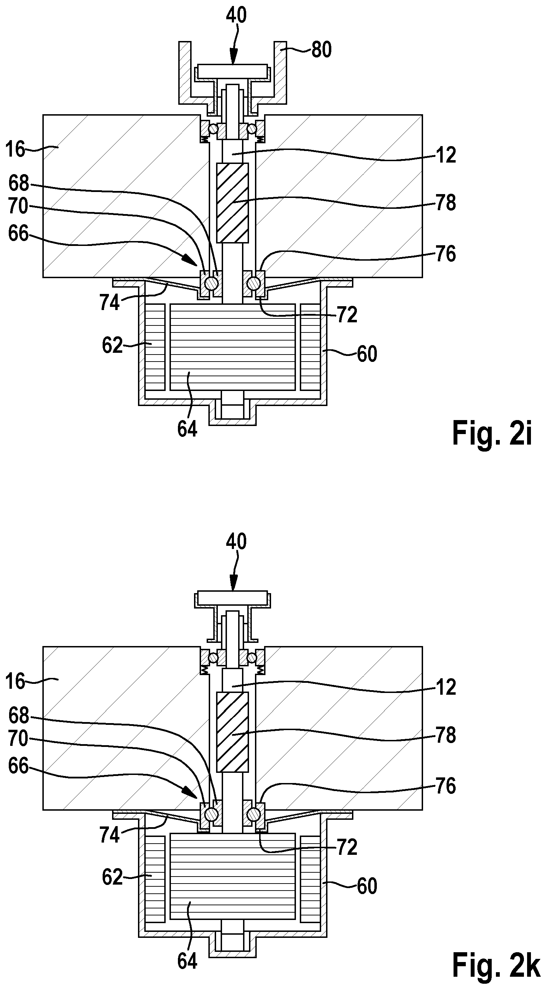

Fig.2 veranschaulicht die Herstellung eines mit einer erfindungsgemäßen Montagebaugruppe (10) ausgestatteten Elektromotors. In den einzelnen Teilfiguren 2a-2k sind schematisch vereinfacht die einzelnen, aufeinanderfolgenden Montageschritte dargestellt. Einander entsprechende Bauteile sind in Fig.1 wie auch in den Teilfiguren der Fig.2 durchgehend mit einheitlichen Bezugszeichen versehen.

Fig.2a zeigt den Ausgangszustand zu Beginn des Montageverfahrens. In diesem Ausgangszustand ist ein Gehäuseblock (16) bereitgestellt, an dem eine diesen Gehäuseblock (16) durchdringende Wellenbohrung (14) ausgebildet ist. Eine elektrische Maschine, im Beispiel ein Elektromotor, mit einem Statorgehäuse (60) ist an einer der Außenseiten dieses Gehäuseblocks (16) befestigt, bspw. durch nicht dargestellte Schraubverbindungen. Im Statorgehäuse (60) sind ein Stator (62) sowie ein drehbar im Inneren dieses Stators (62) aufgenommener Rotor (64) untergebracht. Dieser Rotor (64) ist fest mit der Maschinenwelle (12) verbunden, welche sich in die Wellenbohrung (14) hinein erstreckt. Auf der dem Rotor gegenüberliegenden Seite ragt die Maschinenwelle (12) aus dem Gehäuseblock (16) hinaus. Diese Seite des Gehäuseblocks (16) ist zur Befestigung eines elektronischen Steuergeräts (Pos. 28; Fig.1) vorgesehen.

Zur drehbaren Lagerung der Maschinenwelle (12) bzw. des damit fest verbundenen Rotors (64) im Gehäuseblock (16) ist ein erstes Wälz- bzw. Kugellagerlager (66) vorgesehen. Ein Innenring (68) dieses ersten Wälzlagers (66) ist fest auf die Maschinenwelle (12) aufgepresst, während ein Außenring (70) des ersten Wälzlagers (66) mit einem Abschnitt seines dem Rotor (64) zugewandten Endes umfangseitig in einem ersten Lagersitz (72) an einem Gehäusedeckel (74), welcher das Statorgehäuse (60) abdeckt und mit einem Abschnitt seines vom Rotor (64) abgewandten Endes ebenfalls umfangseitig in einem zweiten Lagersitz (76) an der Außenseite des Gehäuseblocks (16) fest eingepresst ist.

Ein im Inneren der Wellenbohrung (14) gelegener Abschnitt der Maschinenwelle (12) ist mit einem Abtriebselement (78) bestückt. Dabei kann es sich um eine Spindelmutter, ein Zahnrad, einen Exzenter, Nocken oder dgl. handeln. Das Abtriebselement (78) und die Maschinenwelle (12) können in einem Stück hergestellt sein oder alternativ miteinander fest verbundene Einzelteile sein.

Das dem Statorgehäuse (60) gegenüberliegende Ende der Wellenbohrung (14) des Maschinengehäuses weist eine zur Öffnung dieser Wellenbohrung (14) hinweisende Stützschulter (32) auf.

Gemäß Fig.2b ist in die Wellenbohrung (14) das ringförmige und die Maschinenwelle (12) umschließende Federelement (34) eingelegt worden. Im montierten Zustand liegt dieses Federelement (34) an der im Inneren der Wellenbohrung (14) ausgebildeten Stützschulter (32) auf.

Fig. 2c zeigt das zweites Wälz- bzw. Kugellager (20), das mit seinem Innenring (22) auf die Maschinenwelle (12) aufgeschoben worden wird bis es gemäß Fig. 2d mit der vorauseilenden Seitenflanke seines Außenrings (24) am Federelement (32) aufliegt. Umfangseitig liegt das zweite Wälzlager (20) an der Wandung der Lageraufnahme (30) an. Nicht in den Fig. 2c, 2d erkennbar sind eine zwischen dem Innenring (22) des zweiten Wälzlagers (20) und der Maschinenwelle (12) bestehende erste Spielpassung bzw. eine zwischen dem Außenring (24) des zweiten Wälzlagers (20) und der Wandung der Lageraufnahme (30) bestehende zweite Spielpassung.

Im Schritt nach Fig.2e findet die Montage des Befestigungs- bzw. Toleranzrings (52) auf der Maschinenwelle (12) statt. Zunächst wird dazu dieser Befestigungsring (52) auf das freie Ende der Maschinenwelle (12) aufgefädelt und anschließend entlang des Wellenumfangs verschoben, bis ein vorauseilendes Ende den Innenring (22) des zweiten Wälzlagers (20) berührt. Dazu muss in Richtung der Wellenlängsachse wenig axiale Kraft aufgebracht werden, weil eine Passung zwischen dem Befestigungsring (52) und der Maschinenwelle (12) als Spiel- oder Übergangspassung ausgelegt ist.

Gemäß Fig. 2f wird daran anschließend ein Magnet (44) des Signalgebers (40) in die dafür vorgesehene Geberaufnahme (48) des Haltebechers (42) eingelegt und befestigt, beispielsweise durch Einkleben oder durch Verstemmen mit dem Haltebecher (42). Anschließend wird diese vormontierte Einheit aus Haltebecher (42) und Magnet (44) am Außenumfang des Befestigungsrings (52) zentriert und mit Hilfe eines Aufpresswerkzeugs (80) zumindest abschnittsweise auf den Befestigungs- bzw. Toleranzring (52) aufgepresst (Fig. 2g). Das Aufpresswerkzeug (80) greift dazu an der in Einpressrichtung gesehenen Rückseite des dem vom Haltebecher (42) radial abstehenden Einpressbunds (50) an.

Mit beginnender Überdeckung des Haltebechers (42) mit dem Befestigungsring (52) steigen die Aufpresskräfte an und das zwischen der Stützschulter (32) des Gehäuseblocks (16) und dem Außenring (24) des zweiten Wälzlagers (20) einliegende Federelement (34) wird vorgespannt, da aufgrund der Aufpresskräfte der Befestigungsring (52) eine in das Innere der Wellenbohrung (14) hinein gerichtete Bewegung relativ zur Maschinenwelle (12) ausführt und dabei das anliegende zweite Wälzlager (20) vor sich her treibt. Mit der mechanischen Anlage einer Seitenflanke des Innenrings (22) dieses zweiten Wälzlagers (20) an der Wellenschulter (18) der Maschinenwelle (12) hat das zweite Wälzlager (20) seine Endposition erreicht (Fig. 2h).

Die Einheit aus Haltebecher (42) und Magnet (44) wird nun, gemäß Fig. 2i, von den unverändert weiterwirkenden Aufpresskräften relativ zum Befestigungsring (52) weiterbewegt, bis zwischen diesem Haltebecher (42) und dem Befestigungsring (52) eine maximale Überdeckung erreicht ist. Damit endet der Aufpressvorgang des Signalgebers (40). Der Befestigungsring (52) ist nunmehr durch den Haltebecher (42) radial vorgespannt und aufgrund dieser Vorspannung fest auf der Maschinenwelle (12) verankert.

Beim Aufpressvorgang des Signalgebers (40) auf den Befestigungsring (52) wirken die Aufpresskräfte über den Befestigungsring (52) auf den Innenring (22) des zweiten Wälzlagers (20) ein. Der zugeordnete Außenring (24) dieses zweiten Wälzlagers (20) wird dabei von dem an der Stützschulter (32) des Gehäuseblocks (16) abgestützten Federelement (34) in dazu entgegengesetzter Axialrichtung kraftbeaufschlagt. Diese entgegengesetzt zueinander wirkenden Kräfte auf die jeweiligen Lagerringe des zweiten Wälzlagers (20) verspannen die Lagerringe gegeneinander, wodurch sich ein ursprünglich vorhandenes Lagerspiel, also das Spiel der Wälzkörper bzw. Kugeln (26) in ihren Laufbahnabschnitten am Innenring (22) bzw. am Außenring (24) wenigstens annähernd auf null reduziert. Der Innenring (22) des zweiten Wälzlagers (20) steht dabei gegenüber dem Außenring (24) weiter in das Innere der Wellenbohrung (14) hinein vor.

In dem mit Fig. 2k veranschaulichten Schritt ist der Aufpressvorgang des Signalgebers (40) auf den Befestigungsring (52) abgeschlossen. Das Aufpresswerkzeug (80) wurde entlastet und vom Haltebecher (42) entfernt. Dabei entspannt sich das vorgespannte und den Außenring (24) des zweiten Wälzlagers (20) belastende Federelement (34). Folglich bewegt sich der Außenring (24) des zweiten Wälzlagers (20) innerhalb der zugeordneten Lageraufnahme (30) in Richtung der Öffnung der Wellenbohrung (14) und nimmt dabei unter Aufrechthaltung der bestehenden gegenseitigen Verspannung der Lagerringe den zugeordneten Innenring (22) mit.

Letzterer ist zwischen dem Befestigungsring (52) und der Wellenschulter (18) an der Maschinenwelle (12) fest eingespannt, so dass die erläuterte Axialbewegung des Außenrings (24) letztlich auf die gesamte Maschinenwelle (20) übertragen wird.

Da der Innenring (68) des rotorseitig angeordneten ersten Wälzlagers (66), wie dargelegt fest auf der Maschinenwelle (12) aufgepresst ist, folgt auch dieser Innenring (68) der Axialbewegung der Maschinenwelle (12) und bewegt sich damit relativ zu dem in den Lagersitzen (72, 74) ebenfalls fest aufgenommen Außenring (70).

Im Ergebnis wird damit eine Lagerung für die Maschinenwelle (12) geschaffen, bei der die Lagerringe (22, 24; 68, 70) beider Wälzlager (20; 66) jeweils gegeneinander verspannt sind. Eine derartige verspannte Lagerung einer Maschinenwelle (12) in einem Gehäuseblock (16) zeichnet sich insbesondere durch ein geringes Betriebsgeräusch sowie eine hohe Verschleißfestigkeit einer mit dieser Montageeinheit (10) ausgestatteten Maschine aus.

Selbstverständlich sind Änderungen oder Ergänzungen gegenüber dem erläuterten Ausführungsbeispiel denkbar, ohne vom dem mit den unabhängigen Ansprüchen beanspruchten Grundgedanken der Erfindung abzuweichen.

In diesem Zusammenhang sei darauf hingewiesen, dass die Erfindung nicht auf eine Anwendung in Fahrzeugbremsanlagen eingeschränkt ist, sondern generell bei jedweder Art von Maschinen, Motoren oder Generatoren, umgesetzt werden kann. Während mit einem Motor bekanntlich eine dem Stator (62) zugeführte elektrische Energie in ein mechanisches Drehmoment wandelbar ist, mit dem ein Verbraucher über das Abtriebselement (78) von der Maschinenwelle (12) antreibbar ist, wird im Falle eines Generators eine der Maschinenwelle (12) aufgezwungene Rotationsbewegung zur Erzeugung elektrischer Energie genutzt.

## Patentansprüche

1. Montagebaugruppe (10) mit
einer zu einer Rotationsbewegung antreibbaren Maschinenwelle (12),
wenigstens einem Wälzlager (20) zu einer drehbaren Lagerung der Maschinenwelle (12) in einem Gehäuseblock (16), mit einem die Maschinenwelle (12) tragenden Innenring (22) und einem zugeordneten und in einer Lageraufnahme (30) des Gehäuseblocks (16) aufgenommenen Außenring (24),
einem Signalgeber (40) einer Positionserfassungssensorik zu einer Erfassung eines Drehwinkels der Maschinenwelle (12), mit einem Haltebecher (42) und einem am Haltebecher (42) angeordneten Geberelement (44) und
mit einem Befestigungsring (52), der in einem Ringspalt zwischen einem Innenumfang des Haltebechers (42) und dem Außenumfang der Maschinenwelle (12) einliegt, zu einer dreh- und axialfesten Verankerung des Signalgebers (40) an einem Stirnende der Maschinenwelle (12),
**dadurch gekennzeichnet,**
**dass** der Befestigungsring (52) mit einem seiner Enden aus dem Haltebecher (42) des Signalgebers (40) axial vorsteht und mit dem vorstehenden Ende an einer Seitenflanke des Innenrings (22) des Wälzlagers (20) axial abgestützt ist.

2. Montagebaugruppe nach Anspruch 1, **dadurch gekennzeichnet,**
**dass** die Lageraufnahme (30) des Gehäuseblocks (16) eine Stützschulter (32) ausbildet, welche einer Öffnung der Wellenbohrung (14) gegenüberliegt und an welcher ein Federelement (34) axial abgestützt ist,
wobei das Federelement (34) den Außenring (24) des Wälzlagers (20) mit einer Axialkraft belastet, welche einer Stützkraft entgegengerichtet ist mit welcher der Befestigungsring (52) an der Seitenflanke des Innenrings (22) des Wälzlagers (20) abgestützt ist.

3. Montagebaugruppe nach Anspruch 1 oder 2, **dadurch gekennzeichnet, dass** das elastische Federelement (34) eine Wellfederscheibe ist.

4. Montagebaugruppe nach einem der Ansprüche 1 bis 3,
**dadurch gekennzeichnet,**
**dass** der Haltebecher (42) ein hülsenförmiges, beidseitig offenes Bauelement ist, das in einen Fixierabschnitt (46) an einem Stirnende und in eine Geberaufnahme (48) für ein Geberelement (44) am dazu gegenüberliegenden Stirnende gegliedert ist und
wobei der Haltebecher (42) im Bereich des Fixierabschnitts (46) einen kleineren Innendurchmesser als im Bereich der Geberaufnahme (48) aufweist.

5. Montagebaugruppe nach Anspruch 4,
**dadurch gekennzeichnet,**
**dass** das Geberelement (44) einen Magneten umfasst, der im Inneren des Haltebechers (42) an einem Übergang von der Geberaufnahme (48) zum Fixierabschnitt (46) axial anliegt.

6. Montagebaugruppe nach einem der Ansprüche 2 bis 5,
**dadurch gekennzeichnet,**
**dass** der Innenring (22) des zweiten Wälzlagers (20) mit einer Spielpassung auf der Maschinenwelle (12) angeordnet ist und
**dass** der Außenring (24) des Wälzlagers (20) mit einer Spielpassung in der zugeordneten Lageraufnahme (30) des Gehäuseblocks (16) aufgenommen ist.

7. Verfahren zur Herstellung einer Montagebaugruppe nach einem der Merkmale der Ansprüche 1 bis 6, **gekennzeichnet durch** die Schritte:
Bereitstellen eines Gehäuseblocks (16) mit einer Wellenbohrung (14), einer Lageraufnahme (30) und einer am Gehäuseblock (16) befestigten elektrischen Maschine mit einer Maschinenwelle (12), die in die Wellenbohrung (14) des Gehäuseblocks (16) hineinragt;
Montage eines ringförmigen Federelements (34) in die Lageraufnahme (30) des Gehäuseblocks (16), bis das Federelement (34) auf einer am Gehäuseblock (16) ausgebildeten Stützschulter (32) aufliegt;
Aufschieben eines Wälzlagers (20) mit einem Innenring (22) auf die Maschinenwelle (12) und Einführen dieses zweiten Wälzlagers (20) in die Lageraufnahme (30) des Gehäuseblocks (16), bis das zweite Wälzlager (20) mit einer Seitenflanke eines Außenrings (24) am Federelement (34) anliegt;
Fügen eines Befestigungsrings (52) auf die Maschinenwelle (12), bis der Befestigungsring (52) mit einem vorauseilenden Ende am Innenring (22) des Wälzlagers (20) axial anliegt;
Aufpressen eines Signalgebers (40) auf den Umfang des Befestigungsrings (52) **durch** Beaufschlagen des Signalgebers (40) mit einer Axialkraft derart, dass der Befestigungsring (52) mitsamt dem zweiten Wälzlager (20) entlang der Maschinenwelle (12) verschoben und das Federelement (34) axial vorgespannt werden und bis das Wälzlager (20) an einer an der Maschinenwelle (12) ausgebildeten Wellenschulter (18) anliegt;
Verschiebung des Signalgebers (40) relativ zum Befestigungsring (52) in eine Endposition, bei welcher eine maximale Überdeckung des Signalgebers (40) mit dem Befestigungsring (52) erreicht ist und der Befestigungsring (52) mit einem aus dem Haltebecher (42) des Signalgebers (40) vorstehenden Ende am Innenring (22) des zweiten Wälzlagers (20) abgestützt ist.

8. Elektronisch kommutierter Motor, insbesondere zu einem steuerbaren Antrieb eines Bremsdruckerzeugers einer elektronisch schlupfregelbaren Bremsanlage eines Kraftfahrzeugs, **dadurch gekennzeichnet,**
**dass** der elektronisch kommutierte Motor eine Montagebaugruppe (10) nach einem der Ansprüche 1 bis 6 aufweist.

## Claims

1. Installation assembly (10) having
a machine shaft (12) which can be driven to perform a rotational movement,
at least one rolling bearing (20) for rotatably bearing the machine shaft (12) in a housing block (16), comprising an inner ring (22), which supports the machine shaft (12), and an associated outer ring (24) which is received in a bearing receptacle (30) of the housing block (16),
a signal transmitter (40) of a position detection sensor system for detecting a rotation angle of the machine shaft (12), comprising a holding cup (42) and a transmitter element (44) which is arranged on the holding cup (42), and
having a fastening ring (52), which lies in an annular gap between an inner circumference of the holding cup (42) and the outer circumference of the machine shaft (12), for rotationally and axially fixedly anchoring the signal transmitter (40) at one end of the machine shaft (12),
**characterized**
**in that** the fastening ring (52) axially protrudes by way of one of its ends out of the holding cup (42) of the signal transmitter (40) and is axially supported by way of the protruding end against a side flank of the inner ring (22) of the rolling bearing (20).

2. Installation assembly according to Claim 1, **characterized**
**in that** the bearing receptacle (30) of the housing block (16) forms a supporting shoulder (32) which is situated opposite an opening of the shaft bore (14) and against which a spring element (34) is axially supported,
wherein the spring element (34) loads the outer ring (24) of the rolling bearing (20) with an axial force which is opposed to a supporting force with which the fastening ring (52) is supported against the side flank of the inner ring (22) of the rolling bearing (20).

3. Installation assembly according to Claim 1 or 2, **characterized in that** the elastic spring element (34) is a corrugated spring washer.

4. Installation assembly according to any of Claims 1 to 3,
**characterized**
**in that** the holding cup (42) is a sleeve-like component which is open on both sides and is divided into a fixing portion (46) at one end and into a transmitter receptacle (48) for a transmitter element (44) at the opposite end, and
wherein the holding cup (42) has a smaller inside diameter in the region of the fixing portion (46) than in the region of the transmitter receptacle (48).

5. Installation assembly according to Claim 4,
**characterized**
**in that** the transmitter element (44) comprises a magnet which axially bears against a transition from the transmitter receptacle (48) to the fixing portion (46) in the interior of the holding cup (42).

6. Installation assembly according to any of Claims 2 to 5,
**characterized**
**in that** the inner ring (22) of the second rolling bearing (20) is arranged on the machine shaft (12) with a play fit, and
**in that** the outer ring (24) of the rolling bearing (20) is received in the associated bearing receptacle (30) of the housing block (16) with a play fit.

7. Method for producing an installation assembly according to any of the features of Claims 1 to 6, **characterized by** the steps of:
providing a housing block (16) having a shaft bore (14), a bearing receptacle (30) and an electrical machine which is fastened to the housing block (16) and has a machine shaft (12) which projects into the shaft bore (14) of the housing block (16);
installing a ring-shaped spring element (34) into the bearing receptacle (30) of the housing block (16) until the spring element (34) rests on a supporting shoulder (32) formed on the housing block (16);
pushing a rolling bearing (20) by way of an inner ring (22) onto the machine shaft (12) and inserting this second roller bearing (20) into the bearing receptacle (30) of the housing block (16) until the second rolling bearing (20) bears by way of a side flank of an outer ring (24) against the spring element (34);
mounting a fastening ring (52) onto the machine shaft (12) until the fastening ring (52) axially bears by way of a leading end against the inner ring (22) of the rolling bearing (20);
pressing a signal transmitter (40) onto the periphery of the fastening ring (52) by applying an axial force to the signal transmitter (40) in such a way that the fastening ring (52) together with the second rolling bearing (20) are moved along the machine shaft (12) and the spring element (34) is axially preloaded and until the rolling bearing (20) bears against a shaft shoulder (18) formed on the machine shaft (12);
moving the signal transmitter (40) relative to the fastening ring (52) to an end position, in which maximum coverage of the signal transmitter (40) by the fastening ring (52) is achieved and the fastening ring (52) is supported by way of an end protruding out of the holding cup (42) of the signal transmitter (40) against the inner ring (22) of the second rolling bearing (20).

8. Electronically commutated motor, in particular for controllably driving a brake pressure generator of an electronically slip-controllable brake system of a motor vehicle, **characterized**
**in that** the electronically commutated motor has an installation assembly (10) according to any of Claims 1 to 6.

## Revendications

1. Ensemble de montage (10) avec
un arbre de machine (12) pouvant être entraîné dans un mouvement de rotation,
au moins un palier à roulement (20) pour un montage rotatif de l'arbre de machine (12) dans un bloc de boîtier (16), avec une bague intérieure (22) supportant l'arbre de machine (12) et une bague extérieure (24) associée et logée dans un logement de palier (30) du bloc de boîtier (16),
un générateur de signaux (40) d'un système de détection de position pour détecter un angle de rotation de l'arbre de machine (12), avec une coupelle de retenue (42) et un élément générateur (44) agencé sur la coupelle de retenue (42) et
avec une bague de fixation (52) qui s'insère dans un espace annulaire entre une circonférence intérieure de la coupelle de retenue (42) et la circonférence extérieure de l'arbre de machine (12), pour un ancrage fixe en rotation et axialement du générateur de signaux (40) à une extrémité frontale de l'arbre de machine (12),
**caractérisé en ce que**
la bague de fixation (52) dépasse axialement de la coupelle de retenue (42) du générateur de signaux (40) par l'une de ses extrémités et est soutenue axialement par l'extrémité saillante sur un flanc latéral de la bague intérieure (22) du palier à roulement (20).

2. Ensemble de montage selon la revendication 1, **caractérisé en ce que**
le logement de palier (30) du bloc de boîtier (16) réalise un épaulement d'appui (32) qui est opposé à une ouverture de l'alésage d'arbre (14) et sur lequel un élément à ressort (34) est soutenu axialement,
l'élément à ressort (34) exerçant sur la bague extérieure (24) du palier à roulement (20) une force axiale qui s'oppose à une force de soutien avec laquelle la bague de fixation (52) est soutenue sur le flanc latéral de la bague intérieure (22) du palier à roulement (20).

3. Ensemble de montage selon la revendication 1 ou 2, **caractérisé en ce que** l'élément à ressort élastique (34) est une rondelle à ressort ondulée.

4. Ensemble de montage selon l'une quelconque des revendications 1 à 3,
**caractérisé en ce que**
la coupelle de retenue (42) est un composant en forme de manchon, ouvert des deux côtés, qui est divisé en une section de fixation (46) à une extrémité frontale et un logement de générateur (48) pour un élément générateur (44) à l'extrémité frontale opposée, et
la coupelle de retenue (42) présentant un diamètre intérieur plus petit dans la zone de la section de fixation (46) que dans la zone du logement de générateur (48).

5. Ensemble de montage selon la revendication 4,
**caractérisé en ce que**
l'élément générateur (44) comprend un aimant qui repose axialement à l'intérieur de la coupelle de retenue (42) au niveau d'une transition entre le logement de générateur (48) et la section de fixation (46).

6. Ensemble de montage selon l'une quelconque des revendications 2 à 5,
**caractérisé en ce que**
la bague intérieure (22) du deuxième palier à roulement (20) est agencée avec un ajustement avec jeu sur l'arbre de machine (12) et
**en ce que** la bague extérieure (24) du palier à roulement (20) est logée avec un ajustement avec jeu dans le logement de palier (30) associé du bloc de boîtier (16).

7. Procédé de fabrication d'un ensemble de montage selon l'une quelconque des caractéristiques des revendications 1 à 6, **caractérisé par** les étapes suivantes :
la fourniture d'un bloc de boîtier (16) avec un alésage d'arbre (14), un logement de palier (30) et une machine électrique fixée au bloc de boîtier (16) avec un arbre de machine (12) qui s'étend dans l'alésage d'arbre (14) du bloc de boîtier (16) ;
Montage d'un élément à ressort annulaire (34) dans le logement de palier (30) du bloc de boîtier (16) jusqu'à ce que l'élément à ressort (34) repose sur un épaulement d'appui (32) réalisé sur le bloc de boîtier (16) ;
l'enfilage d'un palier à roulement (20) avec une bague intérieure (22) sur l'arbre de machine (12) et l'introduction de ce deuxième palier à roulement (20) dans le logement de palier (30) du bloc de boîtier (16) jusqu'à ce que le deuxième palier à roulement (20) repose contre l'élément à ressort (34) avec un flanc latéral d'une bague extérieure (24) ;
l'ajout d'une bague de fixation (52) sur l'arbre de machine (12) jusqu'à ce que la bague de fixation (52) repose axialement avec une extrémité avancée sur la bague intérieure (22) du roulement (20) ;
le pressage d'un générateur de signaux (40) sur la circonférence de la bague de fixation (52) en exerçant sur le générateur de signaux (40) une force axiale telle que la bague de fixation (52) avec le deuxième palier à roulement (20) est déplacée le long de l'arbre de machine (12) et l'élément à ressort (34) est précontraint axialement, et jusqu'à ce que le palier à roulement (20) repose contre un épaulement d'arbre (18) réalisé sur l'arbre de machine (12) ;
le déplacement du générateur de signaux (40) par rapport à la bague de fixation (52) dans une position finale dans laquelle un recouvrement maximal du générateur de signaux (40) avec la bague de fixation (52) est atteint et la bague de fixation (52) est soutenue par une extrémité faisant saillie de la coupelle de retenue (42) du générateur de signaux (40) sur la bague intérieure (22) du deuxième palier à roulement (20).

8. Moteur à commutation électronique, notamment pour l'entraînement com-mandable d'un générateur de pression de freinage d'un système de freinage à régulation électronique du glissement d'un véhicule automobile, **caractérisé en ce que**
le moteur à commutation électronique présente un ensemble de montage (10) selon l'une quelconque des revendications 1 à 6.
